# EUROPEAN PATENT APPLICATION

(11) **EP 4 772 986 A1**
(43) Date of publication of application: **08.07.2026**
(21) Application number: 24858542.4
(22) Date of filing: 27.08.2024
(51) Int. Cl.: G06F 3/04845

(54) **CONTENT DISPLAY METHOD AND APPARATUS FOR GENERATING IMAGE, DEVICE, STORAGE MEDIUM, AND COMPUTER PROGRAM PRODUCT**

(30) Priority: 31.08.2023 CN 202311118719
(71) Applicant: Beijing Zitiao Network Technology Co., Ltd., Beijing 100190 (CN)
(72) Inventor: HAN, Xuyue, Beijing 100028 (CN); ZHU, Yixuan, Beijing 100028 (CN); HU, Lingxin, Beijing 100028 (CN); ZENG, Xiangrui, Beijing 100028 (CN); ZHENG, Jianglong, Beijing 100028 (CN); FAN, Yiming, Beijing 100028 (CN); CHEN, Tianqi, Beijing 100028 (CN); YANG, Xiaoying, Beijing 100028 (CN)
(74) Representative: Marks & Clerk LLP
(86) International application number: PCT/CN2024/114658
(87) International publication number: WO 2025/045006

(57) **Abstract**

A content display method and apparatus for generating an image, a device, a storage medium, and a computer program product. The method comprises: in response to a preset trigger operation of a user, displaying a preset description information determination page, wherein the description information determination page comprises a preset description information determination control; acquiring target description information determined by the user on the basis of the description information determination control, wherein the target description information comprises feature information used for generating a target image; and in response to an image generation operation triggered by the user, displaying a preset content display page, and displaying in the content display page at least one target image generated on the basis of the target description information.

## Description

### CROSS-REFERENCE TO RELATED APPLICATION(S)

The present application claims priority to Chinese Patent Application No. 202311118719.0, filed on August 31, 2023, which is incorporated herein by reference in its entirety as a part of the present application.

### TECHNICAL FIELD

Embodiments of the present disclosure relate to the field of image generation, and in particular to a content display method and apparatus for image generation, a device, a storage medium, and a product.

### BACKGROUND

With the development of artificial intelligence technology, users can generate text description information according to actual requirements, and create image content matching the description information based on the text description information through an artificial intelligence algorithm, so that the users can obtain image content that is more in line with a current requirement.

Since the users are using mobile terminals in daily life frequently and display sizes of the mobile terminals are limited, how to implement an image generation operation on the mobile terminals is a technical problem to be solved urgently.

### SUMMARY

Embodiments of the present disclosure provide a content display method and apparatus for image generation, a device, a storage medium, and a product, to solve the technical problem that an image generation operation cannot be implemented on a mobile terminal.

According to a first aspect, an embodiment of the present disclosure provides a content display method for image generation. The method includes:
displaying a description information determination page that is preset, in response to a preset trigger operation of a user, where the description information determination page includes a description information determination control that is preset;
obtaining target description information determined by the user based on the description information determination control, where the target description information includes feature information for generating a target image; and
displaying a content display page that is preset, in response to an image generation operation triggered by the user, and displaying, on the content display page, at least one target image generated based on the target description information.

According to a second aspect, an embodiment of the present disclosure provides a content display apparatus. The apparatus includes:
a display module configured to display a description information determination page that is preset, in response to a preset trigger operation of a user, where the description information determination page includes a description information determination control that is preset;
an obtaining module configured to obtain target description information determined by the user by using the description information determination control, where the target description information includes feature information for generating a target image; and
a processing module configured to display a content display page that is preset, in response to an image generation operation triggered by the user, and display, on the content display page, at least one target image generated based on the target description information.

According to a third aspect, an embodiment of the present disclosure provides an electronic device, including: a processor and a memory;
the memory stores computer-executable instructions;
the processor executes the computer-executable instructions stored in the memory, to cause the at least one processor to perform the content display method for image generation according to the first aspect and various possible designs of the first aspect.

According to a fourth aspect, an embodiment of the present disclosure provides a computer-readable storage medium, the computer-readable storage medium stores computer-executable instructions, when the computer-executable instructions is executed by a processor, the content display method for image generation according to the first aspect and various possible designs of the first aspect is implemented.

According to a fifth aspect, an embodiment of the present disclosure provides a computer program product including a computer program, when the computer program is executed by a processor, the content display method for image generation according to the first aspect and various possible designs of the first aspect is implemented.

According to the content display method and apparatus for image generation, the device, the storage medium, and the product provided in the embodiments, the description information determination page that is preset is displayed in response to the preset trigger operation of the user, so that the user can quickly determine the target description information by using the description information determination page. The content display page that is preset is displayed in response to the image generation operation triggered by the user, and the at least one target image generated based on the target description information is displayed on the content display page. The image generation operation can be implemented on the mobile terminal through a page jump operation and a trigger operation. In addition, interaction modes in an image generation process can be enriched, and the user experience can be enhanced.

### BRIEF DESCRIPTION OF DRAWINGS

In order to describe the technical solutions in embodiments of the present disclosure or in the conventional art more clearly, the accompanying drawings for describing the embodiments or the conventional art are briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a content display method for image generation according to an embodiment of the present disclosure;
FIG. 2 is a schematic diagram of interface interaction according to an embodiment of the present disclosure;
FIG. 3 is a schematic diagram of a display interface according to an embodiment of the present disclosure;
FIG. 4 is a schematic diagram of another display interface according to an embodiment of the present disclosure;
FIG. 5 is a schematic diagram of another interface interaction according to an embodiment of the present disclosure;
FIG. 6 is a schematic diagram of a display interface according to an embodiment of the present disclosure;
FIG. 7 is a schematic diagram of another interface interaction according to an embodiment of the present disclosure;
FIG. 8 is a schematic diagram of another interface interaction according to an embodiment of the present disclosure;
FIG. 9 is a schematic diagram of another interface interaction according to an embodiment of the present disclosure;
FIG. 10 is a schematic diagram of another interface interaction according to an embodiment of the present disclosure;
FIG. 11 is a schematic structural diagram of a content display apparatus according to an embodiment of the present disclosure; and
FIG. 12 is a schematic structural diagram of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different means, modules, or units, and are not used to limit the sequence of functions performed by these means, modules, or units or interdependence.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

In order to solve the technical problem that image generation technology cannot be implemented on a mobile terminal currently, the present disclosure provides a content display method and apparatus for image generation, a device, a computer-readable storage medium, and a product.

It should be noted that the content display method for image generation, apparatus, the device, the computer-readable storage medium, and the product provided in the present disclosure can be applied to any application scenario of image generation.

With the rapid development of artificial intelligence, the image generation based on user-generated text description information has become an important development direction of artificial intelligence in the field of computer vision. The current image generation operation is generally implemented in a terminal device that has a large screen and has a certain computing power, for example, in a computer, and how to implement an image generation operation on a mobile terminal has become a technical problem to be solved urgently.

In the process of solving the technical problem described above, the inventors have found through research that, to implement an image generation operation on a mobile terminal, a description information determination page can be displayed on a mobile terminal device, and target description information determined by a user according to actual requirements can be obtained based on a human-computer interaction operation. Then, at least one target image can be generated based on the target description information. The at least one target image is displayed on a content display page of the mobile terminal.

Optionally, a preset image generation model may be coupled within the mobile terminal, so that at least one target image can be generated on the mobile terminal based on the target description information. Alternatively, after obtaining user-generated target description information, the mobile terminal may send the target description information to a cloud server, so that the cloud server generates at least one target image by using a preset image generation model. However, embodiments of the present disclosure are not limited thereto.

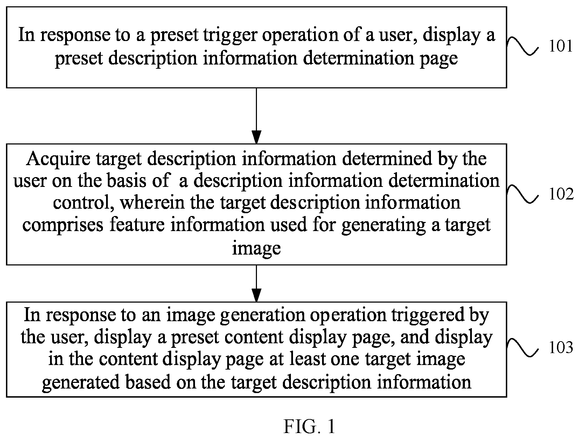

FIG. 1 is a schematic flowchart of a content display method for image generation according to an embodiment of the present disclosure. As shown in FIG. 1, the method includes the following steps.

Step 101: displaying a description information determination page that is preset, in response to a preset trigger operation of a user, where the description information determination page includes a description information determination control that is preset.

An execution entity of this embodiment of the present disclosure is a content display apparatus. The content display apparatus may be coupled to a mobile terminal device, or may be coupled to a server communicatively connected to a mobile terminal device. Therefore, an image generation operation can be performed based on a trigger operation of the user on the mobile terminal device.

In this implementation, to implement the image generation operation, the user-generated target description information firstly needs to be obtained. In response to the preset trigger operation of the user, the preset description information determination page (that is, the description information determination page that is preset) may be displayed, the description information determination page includes the preset description information determination control (that is, the description information determination control that is preset), so that the user can generate, based on the description information determination control, the target description information that meets actual requirements.

Optionally, a preset image generation control may be provided on a display interface of the mobile terminal, and the user can generate a preset trigger operation by using a trigger operation on the image generation control. For example, a preset Internet application may provide the user with a variety of functions, including an image generation function. An image generation control corresponding to the image generation function may be included in a display page corresponding to the Internet application, and the user may invoke the image generation function in the Internet application by triggering the image generation control. Alternatively, still for example, in order to implement the image generation operation, an Internet application for image generation may be provided. Then, the image generation control may be a trigger control corresponding to the Internet application used for image generation. The user may open the Internet application to perform an image generation operation by triggering the image generation control.

Step 102: obtaining target description information determined by the user based on the description information determination control, where the target description information includes feature information for generating a target image.

In this implementation, after the content display page (that is, content display page that is preset) is displayed, the user may determine target description information by using the description information determination control, where the target description information includes feature information for a target image to be generated.

For example, the target description information may be that a girl in a red coat stands by a window, holding a book in her hand, and it is going to rain. In this way, the target image including the feature information may be generated based on the target description information.

Optionally, the target description information may be determined based on a plurality of pieces of preset random description information, or the target description information may be determined by the user based on a preset description information input box, or the target description information may be determined based on preset reference description information. However, embodiments of the present disclosure are not limited thereto.

Step 103: displaying a content display page that is preset, in response to an image generation operation triggered by the user, and displaying, on the content display page, at least one target image generated based on the target description information.

In this implementation, after the target description information is obtained, the at least one target image may be generated based on the target description information in response to the image generation operation triggered by the user.

Optionally, an image generation model may be built into the mobile terminal device, so that at least one target image can be generated on the mobile terminal based on the target description information. Alternatively, after obtaining user-generated target description information, the mobile terminal may send the target description information to a cloud server, so that the cloud server generates at least one target image by using a preset image generation model. However, embodiments of the present disclosure are not limited thereto.

Accordingly, the preset content display page may be displayed in response to the image generation operation, and the at least one target image generated based on the target description information may be displayed on the content display page.

Optionally, the content display page may include a description information determination control, so that the user may flexibly adjust the target description information on the content display page, in order to generate a target image that better meets a personalized requirement.

Further, for example, on the basis of any one of the embodiments described above, before step 103, the method further includes:
displaying, on the content display page, a transition image associated with the at least one target image.

In this embodiment, the process of generating the target image based on the target description information may take a relatively long time to. For example, the target description information may be sent to the cloud server after the user-generated target description information is obtained, so that the cloud server generates a target image based on the target description information. The mobile terminal may obtain the target image sent by the cloud server, and display the target image on the content display page.

However, the content display page may not display valid content until the target image is obtained, and the page may exhibit a waiting state. A long waiting time can lead to poor user experience. Therefore, to enhance the user experience, a transition image associated with the at least one target image may be displayed on the content display page before the at least one target image is displayed on the content display page. The transition image may include content such as a preset pattern and/or a preset color.

According to the content display method for image generation provided in this embodiment, the preset description information determination page is displayed in response to the preset trigger operation of the user, so that the user can quickly determine the target description information by using the description information determination page. The preset content display page is displayed in response to the image generation operation triggered by the user, and the at least one target image generated based on the target description information is displayed on the content display page. The image generation operation can be implemented on the mobile terminal through a page jump operation and a trigger operation. In addition, interaction modes in an image generation process can be enriched, and the user experience can be enhanced.

Optionally, on the basis of any one of the embodiments described above, the description information determination page includes a preset prompt page (that is, a prompt page that is preset).

Step 101 includes:
in response to a trigger operation of the user on an image generation control that is preset, displaying the prompt page when determining that the user triggers the image generation control for the first time; and
displaying prompt information associated with the image generation control and the description information determination control on the prompt page.

In this embodiment, the description information determination page includes a preset prompt page. In response to the trigger operation of the user on the preset image generation control (that is, an image generation control that is preset), if it is determined that the user triggers the image generation control for the first time, this indicates that the user may not have sufficient knowledge of the image generation function. Therefore, in order to make the user more clearly determine the image generation function, a prompt page may be presented. The prompt information associated with the image generation control and the description information determination control are displayed on the prompt page. For example, the prompt information may be: enter text description information to generate an image based on the text description information.

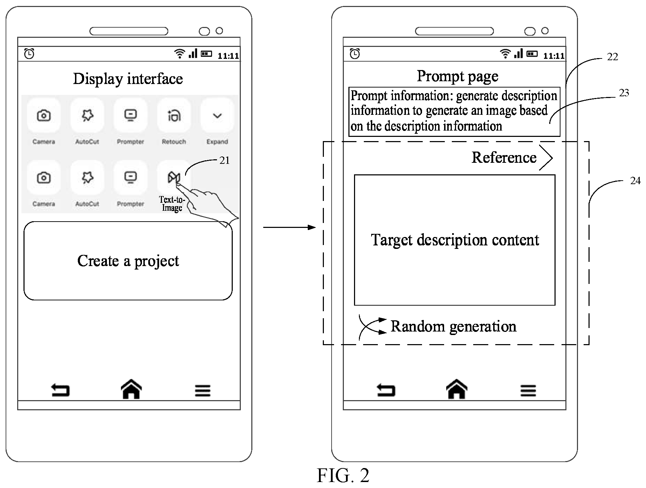

FIG. 2 is a schematic diagram of interface interaction according to an embodiment of the present disclosure. As shown in FIG. 2, in response to a trigger operation of the user on a preset image generation control 21 in a display interface, if it is detected that the user triggers the image generation control for the first time, a prompt page 22 is displayed. For example, prompt information 23 associated with the image generation control and a description information determination control 24 are displayed on the prompt page 22. The user may generate target description content by using the description information determination control 24.

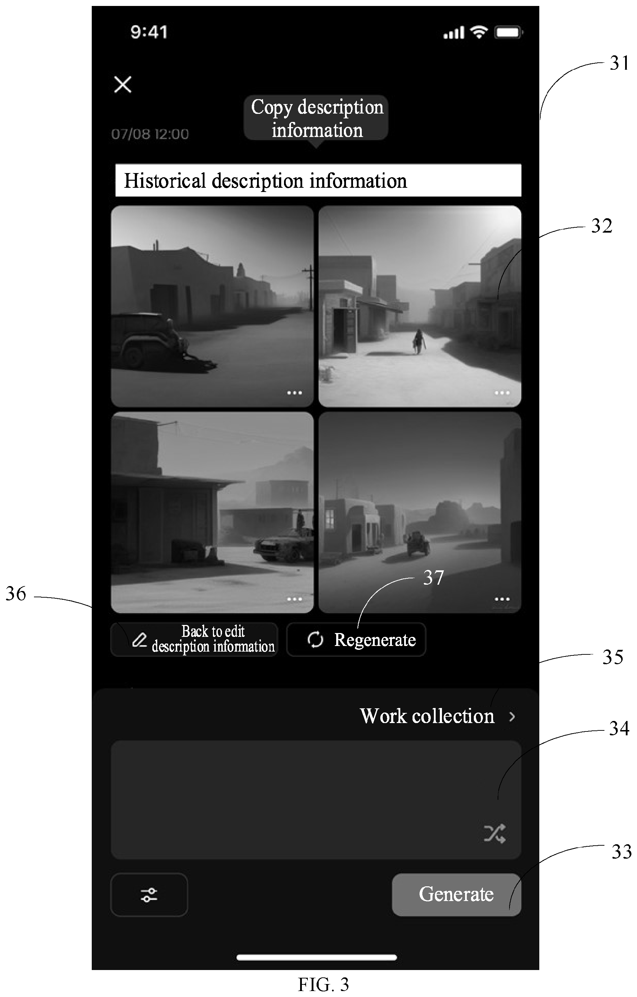

FIG. 3 is a schematic diagram of a display interface according to an embodiment of the present disclosure. As shown in FIG. 3, historical description information and at least one historical image 32 generated based on the historical description information may be displayed on a content display page 31. In addition, a back to edit description information control 36 and a regenerate control 37 may be displayed on a lower side of the historical image 32. The user may perform an editing operation on historical description information by triggering the back to edit description information control 36. The user may generate a new target image again based on the historical description information by triggering the regenerate control 37. The content display page 31 further includes a work collection control 35. The user may view, by performing a trigger operation on the work collection control 35, reference description information and a reference image generated based on the reference description information. The content display page 31 further includes a generate control 33, and at least one target image may be generated based on the target description information by triggering the generate control 33 after the user generates the target description information by using the description information determination control.

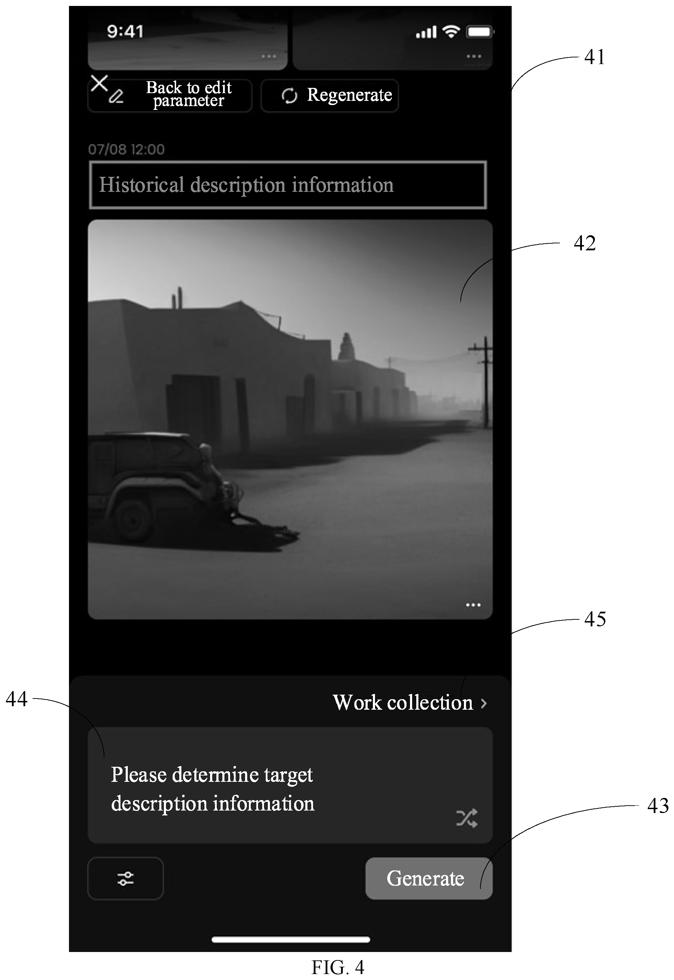

FIG. 4 is another schematic diagram of display interface according to an embodiment of the present disclosure. As shown in FIG. 4, historical description information, at least one historical image generated based on the historical description information, and a trigger control associated with each historical image may be displayed on a content display page 41. The user may view a high-definition version of any historical image by performing a trigger operation on a trigger control. Optionally, a high-definition historical image 42 may be displayed on the content display page 41. In addition, the content display page 41 further includes a description information determination control 44 and a generate control 43, and at least one target image may be generated based on the target description information by triggering the generate control 43 after the user generates the target description information by using the description information determination control 44. The content display page 41 further includes a work collection control 45. The user may view, by performing a trigger operation on the work collection control 45, reference description information and a reference image generated based on the reference description information.

According to the content display method for image generation provided in this embodiment, the preset prompt page is displayed when the user triggers the image generation control for the first time, and the prompt information associated with the image generation control and the description information determination control are displayed on the prompt page so that the user can make a preliminary understanding of the image generation function on the prompt page and quickly generate target description information on the prompt page.

Optionally, on the basis of any one of the embodiments described above, the description information determination page includes the content display page.

Step 101 includes:
displaying the content display page in response to a trigger operation of the user on an image generation control that is preset; and
displaying at least one historical image generated by a historical image generation operation and the description information determination control in a preset layout on the content display page.

In this embodiment, the description information determination page includes the content display page. The description information determination control may be displayed on the content display page.

Accordingly, in response to the trigger operation of the user on the preset image generation control, if it is determined that the user historically triggers the image generation control, this indicates that the user has a certain knowledge of the image generation operation. In this case, the content display page may be displayed in response to the trigger operation of the user on the image generation control. Alternatively, the prompt page may be displayed in response to the trigger operation of the user on the preset image generation control. A jump is made to the content display page based on the preset operation that is triggered by the user on the prompt page. For example, a jump control may be included in the prompt page. The content display page may be displayed in response to a trigger operation of the user on the jump control.

In order to enable the user to more intuitively view a generation result corresponding to the historical image generation operation, the at least one historical image generated by using the historical image generation operation and the description information determination control may be displayed in the preset layout on the content display page.

In a possible implementation, because at least one historically generated historical image of the user is displayed on the content display page, the user may perform switch-to-view operation on the at least one historical image according to actual requirements. When displaying at least one historical image, the at least one historical image of a preset number may be cached in order in which the at least one historical image is posted, and the at least one historical image may be displayed in chronological order. In response to a switching operation of the user, when switching to the historical image corresponding to the median of the preset number of historical images, the preset number of historical images are automatically read in chronological order for a caching operation.

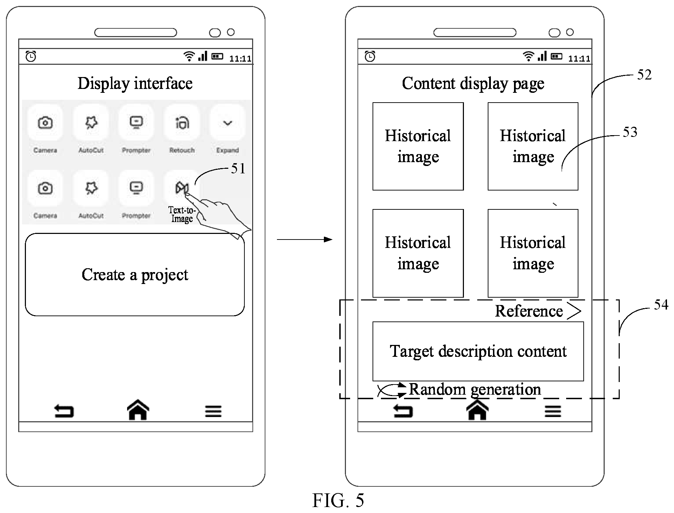

FIG. 5 is another schematic diagram of interface interaction according to an embodiment of the present disclosure. As shown in FIG. 5, in response to a trigger operation of the user on a preset image generation control 51 in a display interface, if it is determined that the user historically triggers the image generation control 51, a content display page 52 is displayed. At least one historical image 53 generated by using a historical image generation operation and a description information determination control 54 are displayed in a preset layout on the content display page 52. The user may generate target description content by using the description information determination control 54.

According to the content display method for image generation provided in this embodiment, the content display page is displayed when it is detected that it is not the first time for the user to trigger the image generation control, and the at least one historical image generated by using the historical image generation operation and the description information determination control are displayed in the preset layout on the content display page, so that the user can view a historically generated historical image on the content display page, and can quickly generate target description information on the content display page.

Further, for example, on the basis of any one of the embodiments described above, the description information determination control includes a text determination control and a parameter selection control.

Step 102 includes:
obtaining text description information determined by the user based on the text determination control, and
obtaining parameter description information determined by the user based on the parameter selection control; and
determining the text description information and the parameter description information as the target description information.

In this embodiment, the target description information may include text description information and parameter description information. Accordingly, the description information determination control includes a text determination control and a parameter selection control.

The user may determine the text description information by using the text determination control, and determine the parameter description information by using the parameter selection control. The user-generated text description information and the parameter description information are determined as the target description information.

For example, the text description information may be: a girl in a red coat stands by a window, holding a book in her hand, and it is going to rain. The parameter description information may be: cartoon style, image size of 4:3.

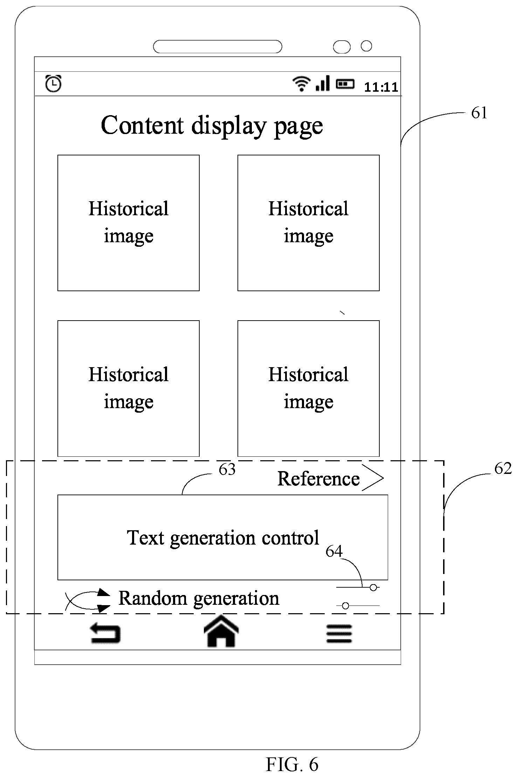

FIG. 6 is a schematic diagram of a display interface according to an embodiment of the present disclosure. As shown in FIG. 6, a description information determination control 62 may be displayed on a content display page 61, where the description information determination control 62 includes a text determination control 63 and a parameter selection control 64. The user may generate text description information by using the text determination control 63, generate parameter description information by using the parameter selection control 64, and determine the text description information and the parameter description information as target description information.

According to the content display method for image generation provided in this embodiment, the user-generated text description information and the parameter description information are separately obtained so that a target image can be more accurately generated based on the text description information and the parameter description information, and the generated target image can better meet the personalized requirement of the user.

Further, for example, on the basis of any one of the embodiments described above, obtaining the parameter description information generated by the user based on the parameter selection control includes:
displaying a parameter adjustment page that is preset in response to a trigger operation of the user on the parameter selection control, where the parameter adjustment page includes at least one parameter adjustment control; and
obtaining parameter description information determined by the user on the parameter adjustment page based on an adjustment operation to the at least one parameter adjustment control.

In this embodiment, the preset parameter adjustment page (that is, a parameter adjustment page that is preset) is displayed in response to the trigger operation of the user on the parameter selection control, where the parameter adjustment page includes the at least one parameter adjustment control therein. For example, the parameter adjustment page may include parameter adjustment controls therein such as an image style adjustment control, an image size adjustment control, and an image quality adjustment control.

The user may perform adjustment operations on the parameter adjustment controls to obtain the parameter description information. For example, the image quality adjustment control may include a slide bar, and the user may determine an image quality parameter by adjusting the slide bar. The image style adjustment control may include a plurality of candidate styles. The user may trigger a target candidate style according to actual requirements, and determine the parameter description information.

According to the content display method for image generation provided in this embodiment, the preset parameter adjustment page is displayed in response to the trigger operation of the user on the parameter selection control, where the at least one parameter adjustment control is displayed on the parameter adjustment page, so that the parameter description information can be quickly generated by performing a trigger operation on the parameter adjustment control by the user, the interaction mode and the display content on the content display page can be enriched, and the user experience can be enhanced.

Optionally, on the basis of any one of the embodiments described above, the description information determination control includes a description information input box.

Step 102 includes:
displaying a preset input control (that is, a input control that is preset) in response to a trigger operation of the user on the description information input box; and
determining the description content input by the user by using the input control as the target description information and displaying the target description information in the description information input box.

In this embodiment, the description information determination control includes the description information input box. The user may customize generation of the target description information based on the description information input box.

Optionally, a preset input control may be displayed in response to a trigger operation of the user on the description information input box. For example, the input control may be an input keyboard. The user may generate description information by using the input control. The description content input by the user by using input control is obtained, the description content is determined as target description information, and the target description information is displayed on the description information input box, so that the user can more intuitively view the currently generated target description information.

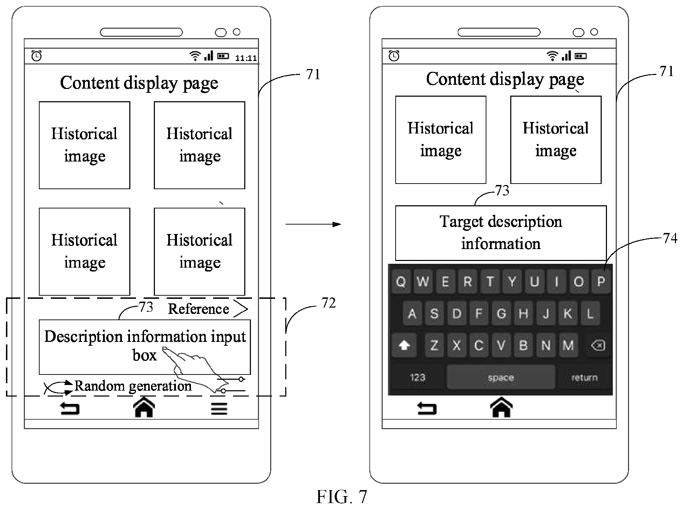

FIG. 7 is another schematic diagram of interface interaction according to an embodiment of the present disclosure. As shown in FIG. 7, a description information determination control 72 may be displayed on a content display page 71, where the description information determination control 72 includes a description information input box 73. A preset input control 74 is displayed in response to a trigger operation of the user on the description information input box 73. Description content input by the user by using the input control 74 is determined as the target description information, and the target description information is displayed in the description information input box 73.

According to the content display method for image generation provided in this embodiment, the preset input control is displayed in response to the trigger operation of the user on the description information input box, so that the user can quickly implement generation of target description information by using the input control, and the user experience can be enhanced.

Optionally, on the basis of any one of the embodiments described above, the description information determination control includes a random generation sub-control.

Step 102 includes:
in response to a trigger operation of the user on the random generation sub-control, displaying, in a description information input box of the description information determination control, random description information determined from a plurality of pieces of preset description information; and
determining the random description information as the target description information.

In this embodiment, in order to quickly implement the generation of the target description information, a description information dataset may be established in advance, and the description information dataset may include a plurality of pieces of preset description information.

Optionally, the description information determination control may include a random generation sub-control. In response to the trigger operation of the user on the random generation sub-control, random description information may be determined from the plurality of pieces of preset description information. The random description information is displayed in the description information input box of the description information determination control. The currently displayed random description information is determined as the target description information.

Optionally, if the user is not satisfied with the current random description information, a trigger operation may be performed on the random generation sub-control again to implement a switching operation on the random description information displayed in the description information input box.

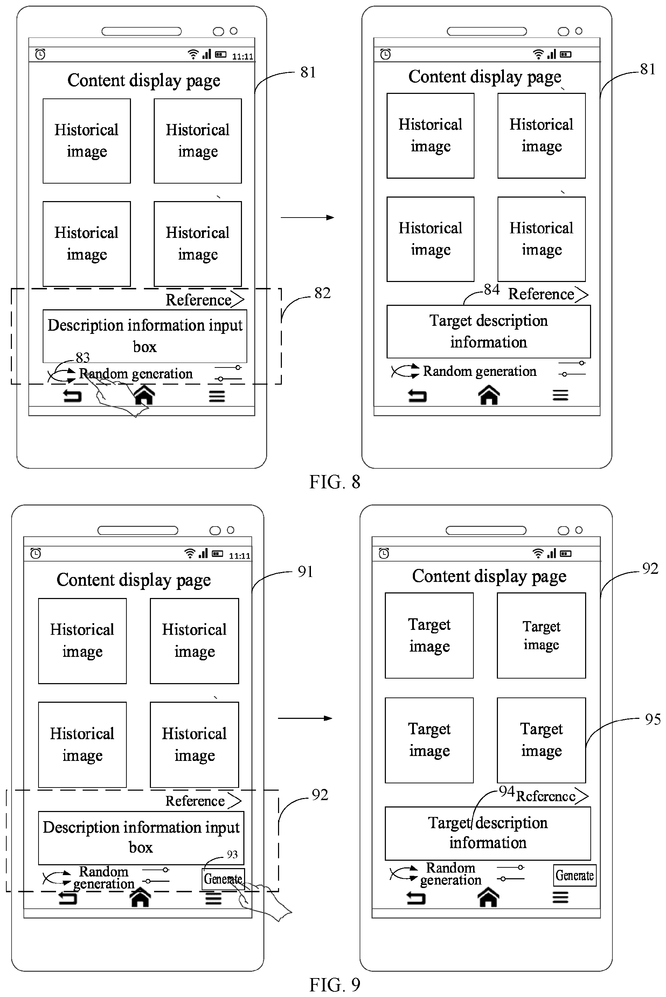

FIG. 8 is another schematic diagram of interface interaction according to an embodiment of the present disclosure. As shown in FIG. 8, a description information determination control 82 may be displayed on a content display page 81, where the description information determination control 82 includes a random generation sub-control 83. In response to a trigger operation of the user on the random generation sub-control 83, random description information determined from a plurality of pieces of preset description information is displayed in a description information input box 84 of the description information determination control 82. The random description information is determined as target description information.

According to the content display method for image generation provided in this embodiment, through a preset random generation sub-control, the user can quickly generate the target description information by using a trigger operation on the random generation sub-control, without the need of manually inputting the target description information, which improves the efficiency of the image generation operation.

Optionally, on the basis of any one of the embodiments described above, the description information determination control includes a reference control.

Step 102 includes:
displaying a preset description information reference page (that is, a description information reference page that is preset) in response to a trigger operation of the user on the reference control, where the description information reference page includes a plurality of pieces of reference description information therein and a reference image generated with each of the plurality of pieces of reference description information; and
determining, in response to a trigger operation of the user on a piece of reference description information or a reference image, the piece of reference description information as the target description information.

In this embodiment, the description information determination control includes the reference control, and the user may use, as reference, or directly use other user-generated description information by using the reference control.

Optionally, if the user cannot customize the generation of the target description information according to actual requirements currently, a trigger operation may be performed on the reference control. For example, the reference control may be triggered if the user currently has no creation inspiration to create the target description information.

A preset description information reference page may be displayed in response to the trigger operation of the user on the reference control, and the plurality of pieces of reference description information and the reference image generated with each of the plurality of pieces of reference description information may be displayed on the description information reference page. The reference description information and the reference image displayed on the reference page may be image generation content historically generated by another user and with good image quality. Alternatively, reference description information and the reference image displayed on the reference page may be image generation content generated historically and downloaded by the current user.

Accordingly, the reference description information is determined as the target description information in response to the trigger operation of the user on any piece of reference description information or any reference image.

In a possible implementation, the preset description information reference page may be displayed in half-screen in order to avoid obscuring the content display page. In order to facilitate the user's viewing and selection of the reference description information or reference image on the preset description information reference page, in response to a preset switching operation of the user, the current display mode of the description information reference page may be switched to be full-screen display.

Optionally, a half-screen description information reference page may be switched to be in full-screen display in response to a swipe-up operation triggered by the user in a preset area of the description information reference page. Alternatively, a trigger operation of the user on the display page is obtained, and a trigger location corresponding to the trigger operation is determined. If it is detected that the trigger location of the trigger operation of the user is located on the description information reference page, the half-screen description information reference page may be switched to be in full-screen display.

According to the content display method for image generation provided in this embodiment, the reference control is preset, so that the description information reference page can be displayed in response to the trigger operation of the user on the reference control, and the plurality of pieces of reference description information and the reference image generated with each piece of reference description information can be displayed on the description information reference page. In this way, the user can quickly generate the target description information by using a selection operation of display content on the description information reference page without the need of manually inputting the target description information, which improves the efficiency of the image generation operation.

Optionally, on the basis of any one of the embodiments described above, step 102 includes:
in response to a trigger operation of the user on an image generation control that is preset, displaying the content display page when determining that the user historically triggers the image generation control;
determining historical description information corresponding to a last image generation operation based on historical storage information; and
determining the historical description information as the target description information and displaying the target description information on the content display page.

In this embodiment, in response to a trigger operation of the user on the preset image generation control on the display page, if it is detected that the user historically triggered the image generation control, and a historical image is generated by using the image generation control, the content display page may be displayed in response to the trigger operation.

In order to prevent the user from manually generating the target description information, the historical description information corresponding to the last image generation operation may be determined based on the historical storage information. The historical description information is determined as the target description information, and the target description information is displayed on the content display page.

According to the content display method for image generation provided in this embodiment, when it is detected that the user historically triggers the image generation control, the content display page is displayed in response to the trigger operation of the user on the preset image generation control, and the historical description information corresponding to the last image generation operation is determined as the current target description information, so that the user does not need to manually input the target description information, and the target description information is quickly generated.

Further, on the basis of any one of the embodiments described above, the description information determination control further includes a preset generation sub-control (that is, a generation sub-control that is preset).

Step 103 includes:
displaying the content display page that is preset in response to a trigger operation of the user on the generation sub-control.

In this embodiment, the description information determination control may be displayed on the content display page, where the description information determination control includes a preset generation sub-control. After the target description information is generated by using the description information determination control, the at least one target image may be generated based on the target description information in response to the trigger operation of the user on the generation sub-control, or the target description information may be sent to a preset cloud server so that the cloud server generates the at least one target image based on the target description information. In addition, the preset content display page is displayed, to display the at least one target image on the content display page.

FIG. 9 is another schematic diagram of interface interaction according to an embodiment of the present disclosure. As shown in FIG. 9, a description information determination control 92 may be displayed on a content display page 91, where the description information determination control 92 includes a preset generation sub-control 93. After target description information 94 is generated by using the description information determination control 92, at least one target image 95 generated based on the target description information may be displayed on the content display page in response to a trigger operation of the user on the generation sub-control 93.

According to the content display method for image generation provided in this embodiment, the generation sub-control is preset, so that the user can quickly generate a target image based on the target description information by using the trigger operation on the generation sub-control.

Further, on the basis of any one of the embodiments described above, step 103 includes:
displaying, in a first display area on the content display page, at least one target image generated based on the target description information; and
displaying the description information determination control in a second display area on the content display page.

In this embodiment, the content display page may include the first display area and the second display area. The first display area and the second display area may be arranged side by side or vertically. The user may adjust display parameters of the first display area and the second display area according to actual requirements, which is not limited in the present disclosure. The display parameters include, but are not limited to, display size, display location, etc.

In the first display area, when the user has not generated at least one target image based on the target description information, the historical image corresponding to the historical image generation operation may be displayed in the first display area based on generation time. After the user generates at least one target image based on the target description information, the at least one target image generated based on the target description information may be displayed in the first display area on the content display page.

The description information determination control is displayed in the second display area on the content display page. In this way, the user can flexibly perform an editing operation on the target description information by using the description information determination control, so that the at least one generated target image can better meet the personalized requirement of the user.

Further, on the basis of any one of the embodiments described above, after displaying, in the first display area on the content display page, the at least one target image generated based on the target description information, the method further includes:
switching, in response to a switching operation triggered by the user towards a first preset direction in the first display area, to display at least one historical image corresponding to a historical image generation operation in preset chronological order.

In this embodiment, the historical image corresponding to the historical image generation operation of the user may be displayed on the content display page. The historical image may be displayed in the first display area in order of generation time.

Optionally, to enable the user to view more display content on the content display page, the user can trigger a switching operation in the first preset direction in the first display area. For example, the user may perform a swipe-up operation, a swipe-down operation, and so onin the first display area.

Accordingly, in response to the switching operation triggered by the user in the first preset direction in the first display area, switching may be performed to display the at least one historical image corresponding to the historical image generation operation in the preset chronological order.

According to the content display method for image generation provided in this embodiment, in response to the switching operation triggered by the user in the first preset direction in the first display area, switching is performed to displa the at least one historical image corresponding to the historical image generation operation in the preset chronological order, so that the content currently displayed on the content display page can better meet the personalized requirement of the user.

Further, for example, on the basis of any one of the embodiments described above, after displaying, in the first display area on the content display page, the at least one target image generated based on the target description information, the method further includes:
switching, in response to a switching operation triggered by the user in a second preset direction in the first display area, to display at least one target image.

In this embodiment, after the target description information is obtained, a plurality of target images may be generated based on the target description information. On the content display page, one of the target images may be displayed in the first display area.

To view more target images, the user may trigger a switching operation in the second preset direction in the first display area. For example, the user may perform swipe operation such as a swipe-left operation or a swipe-right operation in the first display area. In response to the switching operation, switching may be performed to display other target images generated based on the target description information.

According to the content display method for image generation provided in this embodiment, in response to the switching operation triggered by the user in the second preset direction in the first display area, switching is performed to display at least one target image, so that the user can view more target images on the content display page, and the user experience can be enhanced.

Further, for example, on the basis of any one of the embodiments described above, step 103 further includes:
switching, in response to a trigger operation of the user on any target image, in the second display area to displayat least one image processing control associated with the target image currently triggered.

In this embodiment, after the at least one target image is generated based on the target description information, the target image may not meet the personalized requirement of the user, and therefore, the user may perform, according to actual requirements, a trigger operation on the target image that currently needs to be edited.

In response to a trigger operation of the user on any target image, the target image may be switched to be in a selected state. In order to facilitate an editing operation of the user on the currently triggered target image (that is, the target image currently triggered), switching may be performed in the second display area to display the at least one image processing control associated with the currently triggered target image. For example, the image processing control includes, but is not limited to, a resolution adjustment control and a download control.

Further, on the basis of any one of the embodiments described above, the image processing control includes the resolution adjustment control; and
after switching in the second display area to display the at least one image processing control associated with the currently triggered target image, the method further includes:
in response to a trigger operation of the user on the resolution adjustment control, performing an adjustment operation on a definition of the target image currently triggered by the user in a preset adjustment manner to obtain an adjusted target image;
   and/or
the image processing control includes the download control; and
after switching in the second display area to display the at least one image processing control associated with the currently triggered target image, the method further includes:
   storing the target image currently triggered by the user to a preset storage path in response to a trigger operation of the user on the download control.

In this embodiment, the image processing control may include the resolution adjustment control.

Optionally, the at least one target image generated based on the target description information may not meet the personalized requirement of the user. Therefore, the user may perform a trigger operation on the resolution adjustment control to implement an adjustment operation on the resolution of the currently selected target image.

Optionally, in response to a trigger operation of the user on the resolution adjustment control, a resolution adjustment operation may be performed on the target image by using a preset super-resolution algorithm, to increase the resolution of the target image to obtain a higher-quality target image. Alternatively, in response to a trigger operation of the user on the resolution adjustment control, a resolution adjustment operation may be performed on the target image by using a preset down-sampling method to reduce the resolution of the target image, such that the target image can take up less storage space.

In a possible implementation, an adjustment list may be displayed in response to a trigger operation of the user on the resolution adjustment control, where an option to increase the resolution and an option to decrease the resolution may be shown in the adjustment list. In response to a selection operation of the user based on the adjustment list, a resolution adjustment operation is performed on the target image based on the adjustment method selected by the user.

Optionally, the image processing control may include the download control. The target image currently triggered by the user is stored to the preset storage path in response to the trigger operation of the user on the download control.

Optionally, a plurality of target images may be generated based on the target description information. In response to the trigger operation of the user on the download control, data may be stored based on a generation time of the target image.

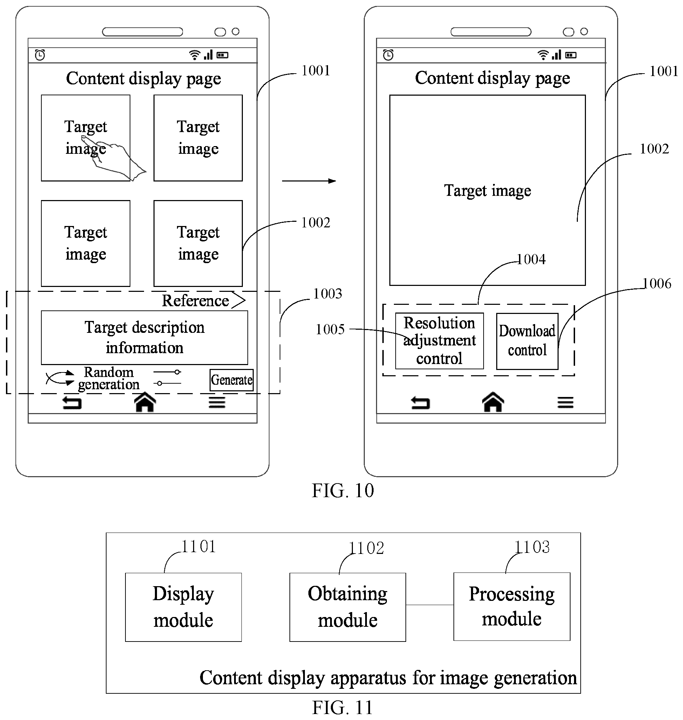

FIG. 10 is another schematic diagram of interface interaction according to an embodiment of the present disclosure. As shown in FIG. 10, at least one target image 1002 generated based on target description information and a description information determination control 1003 may be displayed on a content display page 1001. In response to a trigger operation of the user on any target image 1002, switching may be performed in the second display area to display at least one image processing control 1004 associated with the currently triggered target image. For example, the image processing control 1004 includes a resolution adjustment control 1005 and a download control 1006.

According to the content display method for image generation provided in this embodiment, in response to a trigger operation of the user on any target image, switching is performed in the second display area to display the at least one image processing control associated with the currently triggered target image, so that the user can perform an editing operation on the target image by using the at least one image processing control, and a finally obtained image can better meet the personalized requirement of the user.

Further, for example, on the basis of any one of the embodiments described above, after the response to the trigger operation of the user on the resolution adjustment control, the method further includes:
displaying, in the first display area, a transition image associated with the target image currently triggered by the user; and
after performing the adjustment operation on the definition of the target image currently triggered by the user in the preset adjustment manner, the method further includes:
   displaying the adjusted target image in the first display area.

In this embodiment, the process of performing resolution adjustment on the target image may take a long time. For example, after the trigger operation of the user on the resolution adjustment control is obtained, the target image may be sent to the cloud server to cause the cloud server to adjust the resolution of the target image. The mobile terminal may obtain the adjusted target image sent by the cloud server, and display the adjusted target image on the content display page.

However, the content display page may not be display valid content until the adjusted target image is obtained, and the page may exhibit a waiting state. A longer waiting time can lead to poor user experience.

Therefore, in order to enrich the display content on the content display page, the transition image associated with the target image currently triggered by the user may be displayed in the first display area in response to a trigger operation of the user on the resolution adjustment control. For example, the transition image may include a preset color and/or a preset pattern. After the target image is obtained, the adjusted target image may be displayed in the first display area.

According to the content display method for image generation provided in this embodiment, the transition image associated with the target image currently triggered by the user is displayed in the first display area after the trigger operation of the user on the resolution adjustment control, so that display content on the content display page can be enriched, and the case in which a long generation time of the target image leads to poor user experience can be avoided.

FIG. 11 is a schematic structural diagram of a content display apparatus according to an embodiment of the present disclosure. As shown in FIG. 11, the apparatus includes: a display module 1101, an obtaining module 1102, and a processing module 1103. For example, the display module 1101 is configured to display a description information determination page that is preset in response to a preset trigger operation of a user, where the description information determination page includes a description information determination control that is preset. The obtaining module 1102 is configured to obtain target description information determined by the user based on the description information determination control, where the target description information includes feature information for generating a target image. The processing module 1103 is configured to display a content display page that is preset in response to an image generation operation triggered by the user, and display, on the content display page, at least one target image generated based on the target description information.

Further, for example, on the basis of any one of the embodiments described above, the description information determination page includes a prompt page that is preset. The display module is configured to: in response to a trigger operation of the user on an image generation control that is preset, display the prompt page when determining that the user triggers the image generation control for the first time; and display prompt information associated with the image generation control and the description information determination control on the prompt page.

Further, for example, on the basis of any one of the embodiments described above, the description information determination page includes the content display page. The display module is configured to: display the content display page in response to a trigger operation of the user on an image generation control that is preset; and display at least one historical image generated by a historical image generation operation and the description information determination control in a preset layout on the content display page.

Further, for example, on the basis of any one of the embodiments described above, the description information determination control includes a text determination control and a parameter selection control. The obtaining module is configured to: obtain text description information determined by the user based on the text determination control, and obtain parameter description information determined by the user based on the parameter selection control; and determine the text description information and the parameter description information as the target description information.

Further, for example, on the basis of any one of the embodiments described above, the obtaining module is configured to: display a parameter adjustment page that is preset in response to a trigger operation of the user on the parameter selection control, where the parameter adjustment page includes at least one parameter adjustment control therein; and obtain parameter description information determined by the user on the parameter adjustment page based on an adjustment operation to the at least one parameter adjustment control.

Further, for example, on the basis of any one of the embodiments described above, the description information determination control includes a description information input box. The obtaining module is configured to: display a input control that is preset in response to a trigger operation of the user on the description information input box; and determine, as the target description information, description content input by the user based on the input control, and display the target description information in the description information input box.

Further, for example, on the basis of any one of the embodiments described above, the description information determination control includes a random generation sub-control. The obtaining module is configured to: in response to a trigger operation of the user on the random generation sub-control, display, in a description information input box of the description information determination control, random description information determined from a plurality of pieces of preset description information; and determine the random description information as the target description information.

Further, for example, on the basis of any one of the embodiments described above, the description information determination control includes a reference control. The obtaining module is configured to: display a description information reference page that is preset in response to a trigger operation of the user on the reference control, where the description information reference page includes a plurality of pieces of reference description information therein, and a reference image generated with each of the plurality of pieces of reference description information; and determine, in response to a trigger operation of the user on a piece of reference description information or a reference image, the piece of reference description information as the target description information.

Further, for example, on the basis of any one of the embodiments described above, the obtaining module is configured to: in response to a trigger operation of the user on an image generation control that is preset, display the content display page when determining that the user historically triggers the image generation control; determine historical description information corresponding to a last image generation operation based on historical storage information; and determine the historical description information as the target description information and displaying the target description information on the content display page.

Further, for example, on the basis of any one of the embodiments described above, the description information determination control further includes a generation sub-control that is preset. The processing module is configured to: display the content display page that is preset, in response to a trigger operation of the user on the generation sub-control.

Further, for example, on the basis of any one of the embodiments described above, the processing module is configured to: display, in a first display area on the content display page, the at least one target image generated based on the target description information; and display the description information determination control in a second display area on the content display page.

Further, for example, on the basis of any one of the embodiments described above, the apparatus further includes: a switching module configured to switch, in response to a switching operation triggered by the user in a first preset direction towards the first display area, to display at least one historical image corresponding to a historical image generation operation in preset chronological order.

Further, for example, on the basis of any one of the embodiments described above, the apparatus further includes: a switching module configured to switch, in response to a switching operation triggered by the user in a second preset direction in the first display area, to display the at least one target image.

Further, for example, on the basis of any one of the embodiments described above, the apparatus further includes: a display module configured to switch, in response to a trigger operation of the user on any target image, in the second display area to display at least one image processing control associated with the target image currently triggered.

Further, for example, on the basis of any one of the embodiments described above, the image processing control includes a resolution adjustment control; and the apparatus further includes: a first adjustment module configured to: in response to a trigger operation of the user on the resolution adjustment control, perform an adjustment operation on a definition of the target image currently triggered by the user in a preset adjustment manner to obtain an adjusted target image; and/or the image processing control includes a download control; and the apparatus further includes: a second adjustment module configured to store the target image currently triggered by the user to a preset storage path in response to a trigger operation of the user on the download control.

Further, for example, on the basis of any one of the embodiments described above, the apparatus further includes: a display module configured to display, in the first display area, a transition image associated with the target image currently triggered by the user. The apparatus further includes: a processing module configured to display the adjusted target image in the first display area.

Further, for example, on the basis of any one of the embodiments described above, the apparatus further includes: a display module configured to display, on the content display page, a transition image associated with the at least one target image.

The device provided in this embodiment may be configured to perform the technical solution of the above method embodiment. The implementation principle and technical effects thereof are similar, and are not described herein again in this embodiment.

To implement the above embodiments, an embodiment of the present disclosure further provides an electronic device. The electronic device includes: a processor and a memory.

The memory has computer-executable instructions stored thereon.

The processor executes the computer-executable instructions stored in the memory, to cause the processor to perform the content display method for image generation according to any one of the embodiments described above.

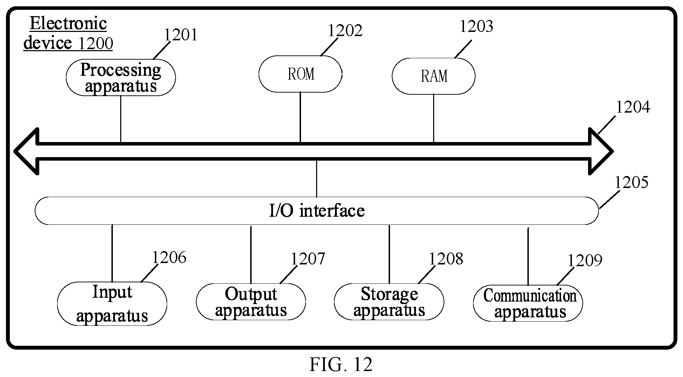

FIG. 12 is a schematic structural diagram of an electronic device according to an embodiment of the present disclosure. As shown in FIG. 12, the electronic device 1200 may be a terminal device or a server. For example, the terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (for example, a vehicle navigation terminal), and a fixed terminal such as a digital TV and a desktop computer. The electronic device shown in FIG. 12 is merely an example, and shall not impose any limitation on the function and scope of use of the embodiments of the present disclosure.

As shown in FIG. 12, the electronic device 1200 may include a processing apparatus (for example, a central processing unit or a graphics processing unit) 1201 that may perform a variety of appropriate actions and processing based on a program stored in a read-only memory (ROM) 1202 or a program loaded from a storage apparatus 1208 into a random-access memory (RAM) 1203. The RAM 1203 further stores various programs and data required for the operation of the electronic device 1200. The processing apparatus 1201, the ROM 1202, and the RAM 1203 are connected to one another through a bus 1204. An input/output (I/O) interface 1205 is also connected to the bus 1204.

Generally, the following apparatus may be connected to the I/O interface 1205: an input apparatus 1206 including, for example, a touchscreen, a touchpad, a keyboard, a mouse, a camera, a microphone, an accelerometer, and a gyroscope; an output apparatus 1207 including, for example, a liquid crystal display (LCD), a speaker, and a vibrator; the storage apparatus 1208 including, for example, a magnetic tape and a hard disk drive; and a communication apparatus 1209. The communication apparatus 1209 may allow the electronic device 1200 to perform wireless or wired communication with other devices to exchange data. Although FIG. 12 shows the electronic device 1200 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1209, installed from the storage apparatus 1208, or installed from the ROM 1202. When the computer program is executed by the processing apparatus 1201, the above-mentioned functions defined in the method of the embodiments of the present disclosure are performed.

It should be noted that the computer-readable medium described in this embodiment of the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In this embodiment of the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

In order to implement the embodiments described above, an embodiment of the present disclosure further provides a computer-readable storage medium storing computer-executable instructions that, when executed by a processor, cause the content display method for image generation according to any one of the embodiments described above to be implemented.

In order to implement the embodiments described above, an embodiment of the present disclosure further provides a computer program product including a computer program that, when executed by a processor, causes the content display method for image generation according to any one of the embodiments described above to be implemented.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to at least one embodiment of the present disclosure, a content display method for image generation is provided. The method includes: displaying a description information determination page that is preset, in response to a preset trigger operation of a user, wherein the description information determination page includes a description information determination control that is preset; obtaining target description information determined by the user based on the description information determination control, wherein the target description information includes feature information for generating a target image; and displaying a content display page that is preset, in response to an image generation operation triggered by the user, and displaying, on the content display page, at least one target image generated based on the target description information.

In one example, the description information determination page includes a prompt page that is preset; and displaying the description information determination page that is preset in response to the preset trigger operation of the user includes: in response to a trigger operation of the user on an image generation control that is preset, displaying the prompt page when determining that the user triggers the image generation control for the first time; and displaying prompt information associated with the image generation control and the description information determination control on the prompt page.

In one example, the description information determination page includes the content display page; and displaying the description information determination page that is preset in response to the preset trigger operation of the user includes: displaying the content display page in response to a trigger operation of the user on a image generation control that is preset; and displaying at least one historical image generated by a historical image generation operation and the description information determination control in a preset layout on the content display page.

In one example, the description information determination control includes a text determination control and a parameter selection control; and obtaining the target description information determined by the user based on the description information determination control includes: obtaining text description information determined by the user based on the text determination control, and obtaining parameter description information determined by the user based on the parameter selection control; and determining the text description information and the parameter description information as the target description information.

In one example, obtaining the parameter description information determined by the user based on the parameter selection control includes: displaying a parameter adjustment page that is preset in response to a trigger operation of the user on the parameter selection control, where the parameter adjustment page includes at least one parameter adjustment control; and obtaining parameter description information determined by the user on the parameter adjustment page based on an adjustment operation to the at least one parameter adjustment control.

In one example, the description information determination control includes a description information input box; and obtaining the target description information determined by the user based on the description information determination control includes: displaying an input control that is preset in response to a trigger operation of the user on the description information input box; and determining, as the target description information, description content input by the user based on the input control, and displaying the target description information in the description information input box.

In one example, the description information determination control includes a random generation sub-control; and obtaining the target description information determined by the user based on the description information determination control includes: in response to a trigger operation of the user on the random generation sub-control, displaying, in a description information input box of the description information determination control, random description information determined from a plurality of pieces of preset description information; and determining the random description information as the target description information.

In one example, the description information determination control includes a reference control; and obtaining the target description information determined by the user based on the description information determination control includes: displaying a description information reference page that is preset in response to a trigger operation of the user on the reference control, where the description information reference page includes a plurality of pieces of reference description information therein, and a reference image generated with each of the plurality of pieces of reference description information; and determining, in response to a trigger operation of the user on a piece of reference description information or a reference image, the piece of reference description information as the target description information.

In one example, obtaining the target description information determined by the user based on the description information determination control includes: in response to a trigger operation of the user on an image generation control that is preset, displaying the content display page when determining that the user historically triggers the image generation control; determining historical description information corresponding to a last image generation operation based on historical storage information; and determining the historical description information as the target description information and displaying the target description information on the content display page.

In one example, the description information determination control further includes a generation sub-control that is preset; and displaying the content display page that is preset, in response to the image generation operation triggered by the user includes: displaying the content display page that is preset in response to a trigger operation of the user on the generation sub-control.

In one example, displaying, on the content display page, the at least one target image generated based on the target description information includes: displaying, in a first display area on the content display page, the at least one target image generated based on the target description information; and displaying the description information determination control in a second display area on the content display page.

In one example, after displaying, in the first display area on the content display page, the at least one target image generated based on the target description information, the method further includes: switching, in response to a switching operation triggered by the user towards a first preset direction in the first display area, to display at least one historical image corresponding to a historical image generation operation in preset chronological order.

In one example, after displaying, on the content display page, the at least one target image generated based on the target description information, the method further includes: switching, in response to a trigger operation of the user on any target image, in the second display area to display at least one image processing control associated with the target image currently triggered.

In one example, the image processing control includes a resolution adjustment control; and after switching in the second display area to display the at least one image processing control associated with the target image currently triggered, the method further includes: in response to a trigger operation of the user on the resolution adjustment control, performing an adjustment operation on a definition of the target image currently triggered by the user in a preset adjustment manner to obtain an adjusted target image; and/or the image processing control includes a download control; and after switching in the second display area to display the at least one image processing control associated with the target image currently triggered, the method further includes: storing the target image currently triggered by the user to a preset storage path in response to a trigger operation of the user on the download control.

In one example, after the response to the trigger operation of the user on the resolution adjustment control, the method further includes: displaying, in the first display area, a transition image associated with the target image currently triggered by the user; and after performing the adjustment operation on the definition of the target image currently triggered by the user in the preset adjustment manner, the method further includes: displaying the adjusted target image in the first display area.

In one example, before displaying, on the content display page, the at least one target image generated based on the target description information, the method further includes: displaying, on the content display page, a transition image associated with the at least one target image.

According to at least one embodiment of the present disclosure, a content display apparatus for image generation is provided. The apparatus includes: a display module configured to display a description information determination page that is preset in response to a preset trigger operation of a user, where the description information determination page includes a description information determination control that is preset; an obtaining module configured to obtain target description information determined by the user based on the description information determination control, where the target description information includes feature information for generating a target image; and a processing module configured to display a content display page that is preset in response to an image generation operation triggered by the user, and display, on the content display page, at least one target image generated based on the target description information.

The foregoing descriptions are merely example embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A content display method for image generation, comprising:
displaying a description information determination page that is preset, in response to a preset trigger operation of a user, wherein the description information determination page comprises a description information determination control that is preset;
obtaining target description information determined by the user based on the description information determination control, wherein the target description information comprises feature information for generating a target image; and
displaying a content display page that is preset, in response to an image generation operation triggered by the user, and displaying, on the content display page, at least one target image generated based on the target description information.

2. The method according to claim 1, wherein the description information determination page comprises a prompt page that is preset; and
displaying the description information determination page that is preset in response to the preset trigger operation of the user comprises:
in response to a trigger operation of the user on an image generation control that is preset, displaying the prompt page when determining that the user triggers the image generation control for the first time; and
displaying prompt information associated with the image generation control and the description information determination control on the prompt page.

3. The method according to claim 1, wherein the description information determination page comprises the content display page; and
displaying the description information determination page that is preset, in response to the preset trigger operation of the user comprises:
displaying the content display page in response to a trigger operation of the user on a image generation control that is preset; and
displaying at least one historical image generated by a historical image generation operation and the description information determination control in a preset layout on the content display page.

4. The method according to claim 1, wherein the description information determination control comprises a text determination control and a parameter selection control; and
obtaining the target description information determined by the user based on the description information determination control comprises:
obtaining text description information determined by the user based on the text determination control, and obtaining parameter description information determined by the user based on the parameter selection control; and
determining the text description information and the parameter description information as the target description information.

5. The method according to claim 4, wherein obtaining the parameter description information determined by the user based on the parameter selection control comprises:
displaying a parameter adjustment page that is preset, in response to a trigger operation of the user on the parameter selection control, wherein the parameter adjustment page comprises at least one parameter adjustment control; and
obtaining parameter description information determined by the user on the parameter adjustment page based on an adjustment operation to the at least one parameter adjustment control.

6. The method according to claim 1, wherein the description information determination control comprises a description information input box; and
obtaining the target description information determined by the user based on the description information determination control comprises:
displaying an input control that is preset, in response to a trigger operation of the user on the description information input box; and
determining, as the target description information, description content input by the user based on the input control, and displaying the target description information in the description information input box.

7. The method according to claim 1, wherein the description information determination control comprises a random generation sub-control; and
obtaining the target description information determined by the user based on the description information determination control comprises:
in response to a trigger operation of the user on the random generation sub-control, displaying, in a description information input box of the description information determination control, random description information determined from a plurality of pieces of preset description information; and
determining the random description information as the target description information.

8. The method according to claim 1, wherein the description information determination control comprises a reference control; and
obtaining the target description information determined by the user based on the description information determination control comprises:
displaying a description information reference page that is preset, in response to a trigger operation of the user on the reference control, wherein the description information reference page comprises a plurality of pieces of reference description information, and a reference image generated with each of the plurality of pieces of reference description information; and
determining, in response to a trigger operation of the user on a piece of reference description information or a reference image, the piece of reference description information as the target description information.

9. The method according to claim 1, wherein obtaining the target description information determined by the user based on the description information determination control comprises:
in response to a trigger operation of the user on an image generation control that is preset, displaying the content display page when determining that the user historically triggers the image generation control;
determining historical description information corresponding to a last image generation operation based on historical storage information; and
determining the historical description information as the target description information and displaying the target description information on the content display page.

10. The method according to any one of claims 1 to 9, wherein the description information determination control further comprises a generation sub-control that is preset; and
displaying the content display page that is preset, in response to the image generation operation triggered by the user comprises:
displaying the content display page that is preset, in response to a trigger operation of the user on the generation sub-control.

11. The method according to any one of claims 1 to 9, wherein displaying, on the content display page, the at least one target image generated based on the target description information comprises:
displaying, in a first display area on the content display page, the at least one target image generated based on the target description information; and
displaying the description information determination control in a second display area on the content display page.

12. The method according to claim 11, wherein after displaying, in the first display area on the content display page, the at least one target image generated based on the target description information, the method further comprises:
switching, in response to a switching operation triggered by the user towards a first preset direction in the first display area, to display at least one historical image corresponding to a historical image generation operation in preset chronological order.

13. The method according to claim 11, wherein after displaying, on the content display page, the at least one target image generated based on the target description information, the method further comprises:
switching, in response to a trigger operation of the user on any target image, in the second display area to display at least one image processing control associated with the target image currently triggered.

14. The method according to claim 13, wherein the image processing control comprises a resolution adjustment control; and
after switching in the second display area to display the at least one image processing control associated with the target image currently triggered, the method further comprises:
in response to a trigger operation of the user on the resolution adjustment control, performing an adjustment operation on a definition of the target image currently triggered by the user in a preset adjustment manner to obtain an adjusted target image;
and/or
the image processing control comprises a download control; and
after switching in the second display area to display the at least one image processing control associated with the target image currently triggered, the method further comprises:
storing the target image currently triggered by the user to a preset storage path in response to a trigger operation of the user on the download control.

15. The method according to claim 14, wherein after the response to the trigger operation of the user on the resolution adjustment control, the method further comprises:
displaying, in the first display area, a transition image associated with the target image currently triggered by the user; and
after performing the adjustment operation on the definition of the target image currently triggered by the user in the preset adjustment manner, the method further comprises:
displaying the adjusted target image in the first display area.

16. The method according to any one of claims 1 to 9, wherein before displaying, on the content display page, the at least one target image generated based on the target description information, the method further comprises:
displaying, on the content display page, a transition image associated with the at least one target image.

17. A content display apparatus for image generation, comprising:
a display module configured to display a description information determination page that is preset, in response to a preset trigger operation of a user, wherein the description information determination page comprises a description information determination control that is preset;
an obtaining module configured to obtain target description information determined by the user by using the description information determination control, wherein the target description information comprises feature information for generating a target image; and
a processing module configured to display a content display page that is preset in response to an image generation operation triggered by the user, and display, on the content display page, at least one target image generated based on the target description information.

18. An electronic device, comprising: a processor and a memory, wherein
the memory stores computer-executable instructions; and
the processor executes the computer-executable instructions stored in the memory, to cause the processor to perform the content display method for image generation according to any one of claims 1 to 16.

19. A computer-readable storage medium, wherein the computer-readable storage medium stores computer-executable instructions, when the computer-executable instructions executed by a processor, the content display method for image generation according to any one of claims 1 to 16 is implemented.

20. A computer program product, comprising a computer program, wherein when the computer program is executed by a processor, the content display method for image generation according to any one of claims 1 to 16 is implemented.
